# EUROPÄISCHE PATENTSCHRIFT

(11) **EP 1 206 966 B1**
(45) Veröffentlichungstag und Bekanntmachung des Hinweises auf die Patenterteilung: **23.07.2003**
(21) Anmeldenummer: 01125825.8
(22) Anmeldetag: 30.10.2001
(51) Int. Cl.: B01L 3/02, B01L 11/00, F04B 43/00

(54) **Vorrichtung zur Aufnahme und Abgabe von Flüssigkeitsproben**
Device for aspirating and dispensing liquid samples
Dispositif d'aspiration et de distribution des échantillons liquides

(30) Priorität: 29.11.2000 CH 23142000; 17.11.2000 CH 22522000
(43) Veröffentlichungstag der Anmeldung: 22.05.2002
(73) Patentinhaber: Tecan Trading AG, 8708 Männedorf (CH)
(72) Erfinder: Ingenhoven, Nikolaus, 8708 Männedorf (CH); Schmid, Noa, 9472 Grabs (CH); Fornito, Stefano, 8625 Gossau (CH)
(74) Vertreter: OK pat AG

(56) Entgegenhaltungen:
- WO-A-97/15394
- DE-A- 4 318 919
- DE-A- 19 827 293
- US-A- 4 087 248
- US-A- 5 916 524
- US-A- 6 024 925

## Beschreibung

Die Erfindung betrifft eine Vorrichtung zur Aufnahme und Abgabe von Flüssigkeitsproben entsprechend dem Oberbegriff des unabhängigen Anspruchs 1 sowie Systeme, die mehrere solcher Vorrichtungen umfassen.

Es ist bekannt, dass Tropfen mit einem Volumen von mehr als 10 µl sehr einfach aus der Luft abgegeben werden können, weil die Tropfen bei korrektem Umgang mit der Pipette von selbst die Pipettenspitze verlassen. Die Tropfengrösse wird dann durch die physikalischen Eigenschaften der Probenflüssigkeit, wie Oberflächenspannung oder Viskosität bestimmt. Die Tropfengrösse limitiert somit die Auflösung der abzugebenden Menge Flüssigkeit.

Die Aufnahme und Abgabe, d.h. das Pipettieren von Flüssigkeitsproben mit einem Volumen von weniger als 10 µl verlangt dagegen meist Instrumente und Techniken, welche die Abgabe solch kleiner Proben garantieren. Das Abgeben einer Flüssigkeit mit einer Pipettenspitze, d.h. mit dem Endstück einer Vorrichtung zur Aufnahme und Abgabe von Flüssigkeitsproben kann aus der Luft ("From Air") oder über das Berühren einer Oberfläche geschehen. Diese Oberfläche kann die feste Oberfläche eines Gefässes ("on Tip Touch") sein, in welches die Flüssigkeitsprobe abgegeben werden soll. Es kann auch die Oberfläche einer sich in diesem Gefäss befindlichen Flüssigkeit ("on Liquid Surface") sein. Ein an das Dispensieren anschliessender Mischvorgang ist - besonders bei sehr kleinen Probenvolumina im Nano- oder gar Picoliter-Bereich zu empfehlen, damit eine gleichmässige Verteilung des Probenvolumens in einem Diluent gewährleistet ist.

Wegwerfspitzen reduzieren wesentlich die Gefahr eines ungewollten Übertragens von Probenteilen in ein Gefäss (Kontamination). Bekannt sind einfache Wegwerfspitzen (sogenannte "Air-Displacement Tips"), deren Geometrie und Material für das reproduzierbare Aufnehmen und Abgeben von sehr kleinen Volumina optimiert ist. Die Verwendung von sogenannten "Positive-Displacement Tips", welche an ihrer Innenseite einen Pumpkolben aufweisen, ist ebenfalls bekannt.

Zum Automatisieren des Pipettierprozesses müssen zwei Vorgänge voneinander unterschieden werden: Die definierte Aufnahme (Aspiration) und die anschliessende Abgabe (Dispensierung) von Flüssigkeitsproben. Zwischen diesen Vorgängen wird üblicherweise die Pipettenspitze vom Experimentator oder einem Automaten bewegt, so dass der Aufnahmeort einer Flüssigkeitsprobe von deren Abgabeort verschieden ist. Für die Richtigkeit und Reproduzierbarkeit einer Aufnahme und Abgabe ist nur das Flüssigkeitssystem wesentlich, welches aus Pumpe (z.B. ein als Spritzenpumpe ausgebildeter Diluter), Flüssigkeitsleitung und Endstück (Pipettenspitze) besteht. Unter den vielen möglichen Pumpen zum hochpräzisen Aspirieren und Dispensieren von Flüssigkeiten haben sich z.B. kommerziell erhältliche Geräte mit dem Namen "CAVRO XL 3000 Modular Digital Pump" bzw. "CAVRO XP 3000 plus Modular Digital Pump" bewährt, welche von der Firma Cavro Scientific Instruments Inc., Sunnyvale, Californien, USA, vertrieben werden. Solche Pumpen umfassen einen Zylinder mit einem darin beweglichen Kolben und einen Schrittmotor zum Antreiben des Kolbens. Der Schrittmotor arbeitet bei einer Spannung von 24 V und wird durch einen externen Rechner oder Mikroprozessor angesteuert. Weitere Details können z.B. aus dem Funktionsbeschrieb "Operators Manual P/N 724043C" von Cavro Scientific Instruments Inc. entnommen werden.

Aus US 5,763,278 ist eine Vorrichtung und ein entsprechendes Verfahren bekannt. Es handelt sich um ein automatisches Pipettieren von kleinen Volumina, wobei die Vorrichtung eine Pipettiernadel, einen Diluter mit einem Flüssigkeitsausgang mit einer Spritze und einem Ventil umfasst. Die Spritze umfasst einen Kolben und einen Kolbenantrieb. Eine Leitung verbindet die Nadel und den Flüssigkeitsausgang des Diluters, wobei der Diluter und die Leitung eine im Wesentlichen inkompressible Flüssigkeit enthalten. Ein Impulsgenerator ist in der Vorrichtung angeordnet und mit der inkompressiblen Flüssigkeit in der Leitung verbunden, so dass direkt in die Flüssigkeit der Leitung mechanische Impulse mit einer Kraft von mindestens 0.01 Ns abgegeben werden können. Ein solcher Impuls dient dazu, Flüssigkeit aus der Nadel zu treiben. Die Tropfengrösse wird durch einen gezielten Vorschub des Diluterkolbens definiert und der Tropfen mit einem Impuls aus der Nadel ausgeworfen. Durch die Definition des Volumens mit dem Diluter hängt die Tropfengrösse und deren Reproduzierbarkeit von der Auflösung des Diluters ab und wird durch diesen limitiert.

Aus JP 09 327628 ist eine Pipettiervorrichtung bekannt, die eine Kolbenpumpe und einen Impulsgenerator in Form eines Piezoelements umfasst. Das Piezoelement ist zugleich die Frontplatte des Kolbens und wird zum Abschliessen des Dispensiervorganges verwendet. Der Kolben bewirkt durch seine Abwärtsbewegung den grösseren Teil der Flüssigkeitsabgabe und ist während der Aktuierung der Piezoplatte blockiert. Die Bewegungsrichtung der Piezoplatte entspricht dabei derjenigen des Kolbens. Zumindest ein Teil des abgegebenen Volumens hängt somit immer von der Bewegung des Kolbens ab, so dass die Reproduzierbarkeit der Kolbenbewegung die Auflösung der Pipettiervorrichtung limitiert.

Aus US 5,916,524 ist eine weitere Vorrichtung zum Abgeben (Dispensieren) von präzisen Reagensmengen mittels einer "positive displacement" Kolbenpumpe bekannt. Diese Pumpe ist über eine Leitung in Serie zu einem Dispenser, wie z.B. einem Aerosoldispenser oder einem Solenoid-Ventil-Dispenser angeordnet. Die durch den Dispenser abgegebene Tropfengrösse und deren Reproduzierbarkeit hängt im Wesentlichen von einem durch die Pumpe erzeugten, kontinuierlichen Fluss ab.

Aus US 4,087,248 ist eine gattungsgemässe Vorrichtung zur Aufnahme und Abgabe von Flüssigkeitsproben bekannt, welche eine Vielzahl von Zylinderräumen mit in diesen Zylinderräumen beweglichen Pumpkolben umfasst. Eine Vielzahl von Spitzen sind jeweils über eine Leitung mit je einem Zylinderraum verbunden. Ein an den Kolben angreifender Kolbenantrieb bewegt alle Kolben simultan gegen die Spitzen hin bzw. zieht diese Kolben von den Spitzen zurück. Die Zylinderräume können über einen Kanal, der in die Zylinderräume mündet, gespült werden. Zudem ist ein Reservoir vorhanden, das in einem oberen Bereich der Vorrichtung angeordnet ist und dazu dient, die Spritzen mit Lösungen zu beliefern oder solche aufzunehmen. Die abgegebene Tropfengrösse und deren Reproduzierbarkeit hängt im Wesentlichen von der Auflösung des Diluters, d.h. der Kolben ab.

Aufgabe der vorliegenden Erfindung ist es, eine Vorrichtung zur Aufnahme und Abgabe von Flüssigkeitsproben bis in den Picoliter-Bereich vorzuschlagen, bei welcher die abgegebene Tropfengrösse und deren Reproduzierbarkeit nicht von der Auflösung eines Diluters omit abhängt.

Diese Aufgabe wird mit den Merkmalen des unabhängigen Anspruchs 1 gelöst. Zusätzliche Merkmale ergeben sich aus den abhängigen Ansprüchen. Die vorliegende Erfindung soll nun - an Hand von schematischen Zeichnungen, welche bevorzugte Ausführungsbeispiele illustrieren und den Umfang der vorliegenden Erfindung nicht einschränken sollen - näher erläutert werden. Dabei zeigen:
- Fig. 1: einen Vertikalschnitt durch eine einfache Vorrichtung zur Aufnahme und Abgabe von Flüssigkeitsproben;
- Fig. 2: einen Vertikalschnitt durch ein System zur Aufnahme und Abgabe von Flüssigkeitsproben mit einem Array von parallel zu einander angeordneten Pumpen und Endstücken bzw. Spitzen;
- Fig. 3: einen vergrösserten Ausschnitt aus Fig. 2, entsprechend dem dort eingezeichneten Feld;
- Fig. 4: eine horizontale Draufsicht auf eine Anordnung des Kolbenantriebs gemäss einer ersten Ausführungsform;
- Fig. 5: eine horizontale Draufsicht auf eine Anordnung des Kolbenantriebs gemäss einer zweiten Ausführungsform.

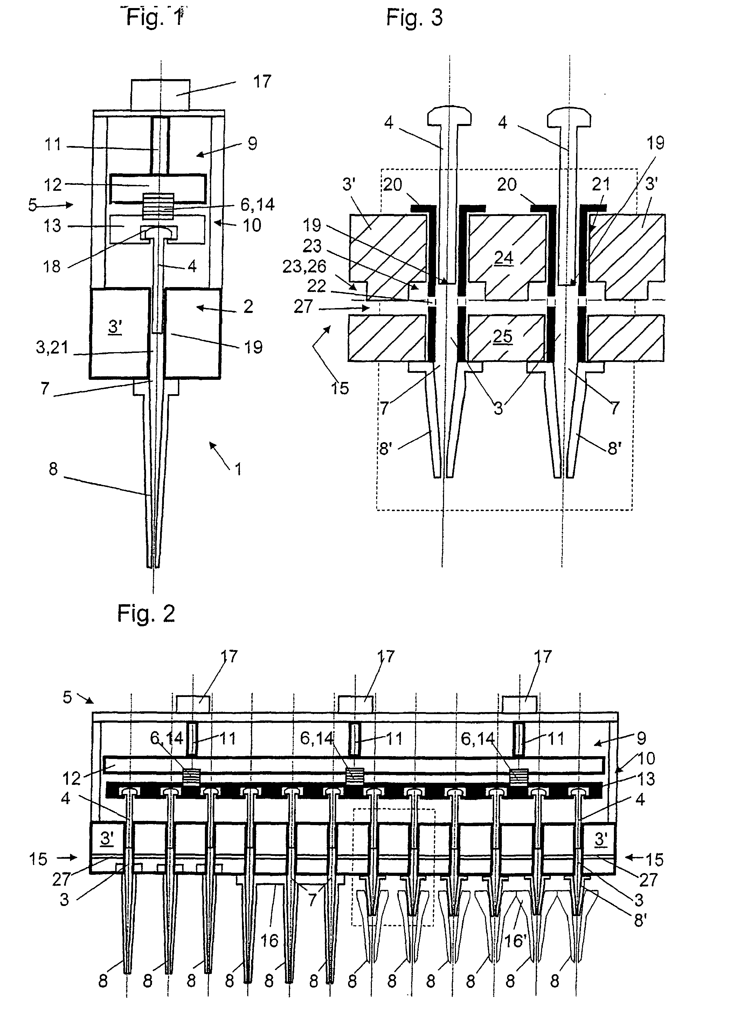

Figur 1 zeigt eine Vorrichtung 1 zur Aufnahme und Abgabe von Flüssigkeitsproben mit einer Pumpe 2. Diese Pumpe umfasst einen Zylinderraum 3, der wiederum einen in diesem Zylinderraum beweglichen Kolben 4 und einen am Kolben angreifenden Kolbenantrieb 5 umfasst. Zudem umfasst diese Vorrichtung 1 einen Impulsgenerator 6, welcher - zum Bewirken der Abgabe von Proben aus einer Flüssigkeit - zum Erzeugen von Druckwellen in dieser Flüssigkeit ausgebildet ist.

Über eine Leitung 7 ist ein Endstück bzw. eine Spitze 8 mit dem Zylinderraum 3 verbunden. Diese Spitze 8 ist als Stahlnadel gezeichnet, welche direkt am Körper bzw. am Zylinderblock 3' der Pumpe 2 ansetzt. Vorzugsweise schliesst die als Stahlnadel ausgeführte Spitze 8 übergangslos an den Zylinderraum 3 der Pumpe 2 an, so dass die Pipettenspitze aus Stahl eine kontinuierliche Verengung des Pumpenzylinderraumes 3 darstellt. Diese Ausgestaltung verhindert das Auftreten von unerwünschten Wirbeln und ermöglicht die ungehinderte Ausdehnung der durch den Impulsgenerator 6 ausgelösten Druckwelle in der zu pipettierenden Flüssigkeit.

Der Kolbenantrieb 5 umfasst einen ersten Antrieb 9 und einen, als Impulsgenerator 6 ausgebildeten, zweiten Antrieb 10. Dieser erste Antrieb 9 ist vorzugsweise als Drehspindelantrieb ausgebildet und umfasst eine Spindel 11 und eine mit dieser Spindel bewegbare erste Platte 12. Der zweite Antrieb 10 umfasst eine zweite Platte 13, welche über einen Impulsgenerator 6 mit der ersten Platte 12 verbunden ist und welche am Kolben 4 angreift.

Der von Zylinderraum 3 und Kolben 4, Leitung 7 und Spitze 8 definierte Raum ist vorzugsweise mit einer zusammenhängenden Flüssigkeitssäule gefüllt, so dass das Volumen einer abgegebenen Flüssigkeitsprobe bei gegebener Spitzengeometrie allein durch die Parameter eines einzelnen, durch den Impulsgenerator 6 erzeugten Impulses definiert ist. Der Zylinderraum 3 umfasst vorzugsweise einen Inhalt von 5 bis 200 µl und der Impulsgenerator 6 ist hier als vorgespannter Stapel von Piezo-Elementen 14 ausgebildet. Zusätzliche Ergebnisse zeigen, dass auch mit einer Luftblase bzw. einem "Air Gap" in der Leitung 7 pipettiert werden kann.

Abweichend von der Darstellung in Fig. 1 kann die Spitze 8 zum Pipettieren von Flüssigkeiten als Nadel aus anderen Materialien oder auch als Wegwerfspitze aus Kunststoff ausgebildet sein. Zumeist wird dann der Übergang von dem Zylinderraum 3 zu der Spitze 8 vorzugsweise mit einem sogenannten Spitzenadapter 8' bewerkstelligt. Ein solcher Spitzenadapter wird bevorzugt aus rostfreiem Stahl hergestellt und ist so geformt und ausgerüstet, dass ein sicherer und dichter Sitz für eine beispielsweise aus Kunststoff hergestellte Nadel oder Wegwerfspitze gewährleistet ist. Der Einsatz eines O-Rings zwischen Spitzenadapter 8' und Spitze 8 kann diesen Sitz und die erforderliche Dichtheit günstig unterstützen.

Die besondere Anordnung von Pumpe 2, Kolbenantrieb 5, Impulsgenerator 6 und Spitze 8 ermöglicht eine extrem schlanke Bauweise der Vorrichtung 1, so dass diese speziell geeignet ist, einen Baustein in einem System zur Aufnahme und Abgabe von Flüssigkeitsproben zu bilden, welches mehrere solche Vorrichtungen 1 umfasst. So ein System ist beispielsweise ein Pipettierautomat bzw. (im Falle eines Systems zur Abgabe von Proben) ein Dispensierautomat. Ein solches System wird vorzugsweise zur Abgabe von Flüssigkeiten in die Aufnahmetöpfchen ("Wells") von Standard-Mikroplatten mit z.B. 96 Wells (Dispensierung) oder zur Aufnahme von Flüssigkeiten aus der einen und Abgabe der Probe in eine andere Mikroplatte (Pipettierung) verwendet. Die Reduktion der Probenvolumina (z.B. zum Befüllen von hochdichten Mikroplatten mit 384, 864, 1536 oder noch mehr Töpfchen) spielt eine zunehmend wichtige Rolle, wobei der Genauigkeit des abgegebenen Probenvolumens grosse Bedeutung zukommt. Ebenfalls ist der Zeitaufwand für das Abgeben bzw. Transferieren von Proben in diese vielen Töpfchen wesentlich. Es ist klar, dass ein Mehrfaches an parallel bedienbaren Pipettenspitzen den Zeitaufwand für die effektive Probenabgabe bzw. für das Transferieren um den gleichen Faktor reduziert.

Grundsätzlich gilt somit die Überlegung, dass ein System mit n Vorrichtungen, zumindest aber ein solches mit n Pumpen 2, n Leitungen 7 und n Spitzen 8, mit einem ersten Antrieb 9 und einem zweiten Antrieb 10 sowie mit m Impulsgeneratoren nur 1/n der Abgabezeit eines einzigen mit je einem dieser Bauteile ausgerüsteten Vorrichtung benötigt. Beim Befüllen von hochdichten Mikroplatten spielt somit der Zeitfaktor eine wesentliche Rolle. Besonders wichtig sind diese Überlegungen, wenn n ein Vielfaches von 4 - insbesondere 8, 96 oder 384 - und m eine ganze Zahl - insbesondere 1, 2 oder 3 - bedeuten.

Weil die Anordnung der Töpfchen in den Mikroplatten einem zweidimensionalen Array entspricht, werden die Bauteile, wie Pumpe 2, Kolbenantrieb 5, Impulsgenerator 6 und Spitze 8 eines Systems bevorzugt ebenso angeordnet. Um eine kompakte Konstruktion zu erreichen, werden dabei Pumpen 2 und Spitzen 8 parallel zu einander angeordnet. Ein Beispiel einer solchen Anordnung ist in Figur 2 dargestellt.

Der Bedarf an schnellen Pipettierautomaten im Life-Science Bereich hat die Entwicklung von Multikanalpipettoren vorangetrieben. Bei den bekannten Lösungen variieren sowohl die Anzahl der Kanäle bzw. der Spitzen als auch die Bereiche der zu pipettierenden Probenvolumina. Als praktizierbare Volumengrenze für die freie Abgabe aus der Luft kann dabei etwa 1 µl angenommen werden.

Es sind seit langem Mehrkanal-Systeme bekannt, bei denen 4, 8 oder 12 Pipettierkanäle auf einer Linie verteilt sind. Die Spitzen sind entweder in einem starren Raster angeordnet (wie z.B. die MiniPrep Geräte-Linie von Firma CAVRO Scientific Instruments Inc., Sunnyvale, Californien, USA) oder sie können auf einer Linie gespreizt werden (wie z. B. die GENESIS Geräte-Linie von TECAN Schweiz AG, Seestrasse 103, CH-8708 Männedorf). Die Pipettierkanäle werden entweder über einen Schrittmotor mit einer oder mehreren Spritzen gemeinsam oder über die gleiche Anzahl Dilutoren wie Spritzen individuell betrieben.

Mehrkanalsysteme für Volumina im Submikroliterbereich sind als starre zweidimensionale Kämme (wie z.B. der PixSys4500 von Cartesian Technologies, Inc., 17851 Sky Park Circle, Irvine, CA 92614, USA) oder aus EP 0 956 449 bekannt. Diese zweidimensionalen Kämme von Pipetten genügen jedoch den heutigen Ansprüchen an den Probendurchsatz meist nicht mehr.

In drei Dimensionen angeordnete Multikanalpipettoren sind ebenfalls bekannt. Sie können als 96 Spitzengerät mit 96 individuellen Schläuchen und 96 individuellen Spritzen, welche jeweils in Achtergruppen von einem gemeinsamen Schrittmotor angetrieben werden (wie z.B. die MICROLAB MPH-96 Workstation von Hamilton Bonaduz AG, P.O. Box 26, 7402 Bonaduz, Schweiz). Dieses System ist wegen der grossen Anzahl Spritzen und Motoren sehr aufwändig und teuer. Zudem ist es schwierig, störende Luftblasen aus allen Schläuchen zu entfernen.

Es werden auch Arrays mit bis zu 384 einzelnen Glasspritzen mit Kanülen im Raster einer 384 Mikroplatte angeordnet. Die Stempel der Spritzen werden von einem einzelnen Schrittmotor simultan bewegt (wie z.B. die Hydra von Robbins Scientific, 1250 Elko Drive, Sunnyvale, CA 94089-2213, USA). Das Verfahren ist wegen der vielen Spritzen teuer. Es ist nicht auf Wegwerfspitzen ausbaubar.

An Stelle von Dilutern, Spritzen und Kolben werden auch Metallbälge eingesetzt (vgl. US 5,638,986). Wegen der kleineren zu bewegenden Masse werden Abgabegeschwindigkeiten erreicht, die geeignet sind, Volumina bis 0.5 µl aus der Luft abzugeben (wie z.B. der Liliput Dispenser von Fluilogic Systems Oy, Luoteisrinne 4, 02270 Espoo, Finnland). Ein Nachteil aber besteht darin, dass sich die Metallbälge nicht wie z.B. ein Diluter kalibrieren lassen.

Das häufigste Konstruktionsprinzip von dreidimensional angeordneten Multikanalpipettoren umfasst eine Platte an bzw. in der 96 oder 384 Kolben oder Stempel befestigt sind. Diese Platte wird mit den Kolben zum Aspirieren bzw. Dispensieren von einem oder mehreren Motoren auf und ab bewegt.

Der generelle Nachteil all dieser Systeme (mit Ausnahme der Metallbälge) liegt darin, dass Volumina im Submikroliterbereich nur "on Tip Touch" oder "on Liquid Surface", nicht aber berührungslos, direkt aus der Luft abgegeben werden können. Ein Multikanal-System entsprechend der vorliegenden Erfindung ermöglicht dagegen, die pipettierbaren Volumina bis in den Nanoliterbereich zu verkleinern.

Figur 2 zeigt einen Vertikalschnitt durch ein System zur Aufnahme und Abgabe von Flüssigkeitsproben mit einem Array von parallel zu einander angeordneten Pumpen 2 und Spitzen 8. Das dargestellte Beispiel symbolisiert ein Array von 12 x 8, d.h. 96 Pumpen 2 und Spitzen 8. Dieses Array entspricht dem Format und der Anordnung einer Mikroplatte mit 96 Töpfchen. Jedes Bauelement dieses Systems umfasst eine Vorrichtung 1 zur Aufnahme und Abgabe von Flüssigkeitsproben mit einer Pumpe 2, welche einen Zylinderraum 3, einen in diesem Zylinder beweglichen Kolben 4 und einen am Kolben angreifenden Kolbenantrieb 5 umfasst, mit einem Impulsgenerator 6, welcher - zum Bewirken der Abgabe von Proben aus einer Flüssigkeit - zum Erzeugen von Druckwellen in dieser Flüssigkeit ausgebildet ist und mit einer über eine Leitung 7 mit dem Zylinderraum 3 verbundenen Spitze 8, wobei der Kolbenantrieb 5 einen ersten Antrieb 9 und einen, als Impulsgenerator 6 ausgebildeten, zweiten Antrieb 10 umfasst. Jeder Zylinderraum 3 umfasst vorzugsweise einen Inhalt von 5 bis 200 µl, wobei sich der genaue Bereich nach der Auslegung richtet, die entsprechend einem geplanten Einsatz konzipiert werden kann. Diese Vorrichtungen sind dadurch gekennzeichnet, dass sie einen Kanal 27 zum Spülen des Zylinderraums 3 umfassen, wobei der Kanal 27 in den Zylinderraum 3 mündet. Pro Pipettierkanal kann je ein solcher Antrieb 9,10 vorgesehen sein, es können aber auch einzelne Teile der Antriebe 9,10 in Baugruppen vereinfacht oder zusammengefasst werden.

Die ganze Matrix der 96 Kolben 4 wird durch drei Spindeln 11 bewegt. Dabei wirken diese drei Spindeln auf die erste Platte 12 und über die drei Piezo-Stapel 14 auf die zweite Platte 13, welche wiederum auf die Kolben 4 in den Zylindern wirkt. Die Spindeln 11 werden durch je einen Präzisionsmotor 17 angetrieben, so dass ein erster Antrieb 9 drei simultan drehende Spindeln 11 umfasst, welche auf eine gemeinsame erste Platte 12 wirken. Der erste Antrieb 9 dient zum Bewegen der Kolben 4 beim Aufnehmen von Flüssigkeit (Aspirieren) und zum Nachliefern von Flüssigkeit in die Spitzen 8 vor, während bzw. nach der Abgabe von Flüssigkeitsproben (Dispensieren) aus denselben.

Der zweite Antrieb 10 umfasst hier drei, je einen vorgespannten Stapel von Piezo-Elementen 14 aufweisende, Impulsgeneratoren 6, welche die erste Platte 12 mit der zweiten Platte 13 verbinden. Vorzugsweise sind die beiden Platten 12,13 permanent so über die Piezo-Stapel miteinander verbunden, dass sie durch diese Piezo-Aktuatoren schwingungsfrei aufeinander zu und voneinander weg bewegt werden können. Eine Aktuierung der Piezo-Stapel bewegt die zweite Platte 13 und damit auch die Kolben 4 vorzugsweise um bis zu 20 µm. Die zweite Platte 13 greift simultan an allen 96 Kolben 4 an. Zu diesem Zweck weist die zweite Platte 13 Ausnehmungen 18 auf, in welche die freien Enden 19 der Kolben 4 eingreifen bzw. in welchen diese Enden 19 gehalten sind. Die 96 Kolben 4 sind Bestandteil eines Arrays von 96, parallel zu einander angeordneten Pumpen. Die Zylinder sind als Bohrungen 21 in einem Zylinderblock 3' ausgebildet, in denen je ein Kolben 4 beweglich angeordnet ist. An die Zylinderräume 3 schliessen 96 Leitungen 7 bzw. 96 Spitzen 8 an.

Die Endstücke bzw. Spitzen 8 können einzeln, d.h. für jeden Kanal individuell (wie unter Fig. 1 beschrieben) oder als Spitzenplatte 16,16' mit einer entsprechenden Anzahl von hier 96 Spitzen 8 ausgebildet sein. In Fig. 2 sind (von links nach rechts) vier Beispiele von Spitzen 8 abgebildet, dabei sind die ersten drei als einzelne Stahlspitzen 8, die zweiten drei als Stahlspitzenplatte 16, die dritten drei als einzelne Wegwerfspitzen 8 und die vierten drei als Wegwerfspitzenplatte 16' dargestellt. Vorzugsweise sind jeweils zwischen den Spitzen 8 und deren Adaptern 8' Dichtungen (nicht gezeichnet) angeordnet, damit ein sicherer Sitz der Spitzen 8 auf ihrem jeweiligen Adapter 8' bzw. die Dichtheit der Leitung 7 zwischen Kolben 4 und Pipettenspitze 8 garantiert ist.

Damit Luftblasen in der Flüssigkeit, welche die Zylinderräume 3, die Leitungen 7 und die Spitzen 8 füllt, verhindert werden oder daraus entfernt werden können, ist zum Spülen der Zylinderräume 3 im Zylinderblock 3' ein Kanalsystem 15 vorgesehen. Über eine (nicht gezeigte) Leitung kann somit das ganze Kanalsystem 15 und alle Zylinderräume 3 von hinten (nicht durch die Pipettenspitzen 8) mit Flüssigkeit gefüllt und so gespült werden. Die Mündung dieses Kanalsystems 15 im Bereich der Zylinderräume 3 ist in Fig. 3 dargestellt. Die Zylinderräume 3 sind in diesem Ausführungsbeispiel identisch mit dem Innenraum von Hülsen 20, welche in Bohrungen 21 des Zylinderblocks 3' eingesetzt sind. Alternativ dazu können die Bohrungen 21 im Zylinderblock 3' direkt als Zylinder benutzt werden (vgl. Fig. 2). Alternativ zum im Fig. 3 gezeigten, Einzelkanäle 27 aufweisenden Kanalsystem 15 kann die Versorgung der Pumpen 2 über ein einfacheres Kanalsystem 15 (vgl. Fig. 2) erfolgen. Dieses erstreckt sich im Wesentlichen über die ganze Fläche der Platten 12,13 in etwa gleicher Höhe und stellt einen einfachen, zusammenhängenden Hohlraum dar.

Werden Hülsen 20 verwendet, so weisen diese eine seitliche, vorzugsweise durchgehende Öffnung 22 auf, welche mit dem Kanalsystem 15 kommuniziert.

Damit die individuelle Drehlage der Hülsen 20 keinen Einfluss auf die Erschliessung durch das Kanalsystem 15 hat, weist das Kanalsystem im Bereich jeder Hülse 20 eine Erweiterung 23 auf. Vorzugsweise wird in diesem Fall der Zylinderblock 3' zweiteilig hergestellt. Dabei werden in einem ersten Teil 24 des Zylinderblocks 3' kreisförmige Vertiefungen 26 und in einem zweiten Teil 25 des Zylinderblocks 3' die Einzelkanäle 27 des Kanalsystems 15 angeordnet. Dies kann - entsprechend dem Material (Glas, Stahl, Kunststoff etc.), das für die Teile des Zylinderblocks 3' ausgewählt wird - durch Eingraben, Fräsen, Ätzen oder mit sonstwie geeigneten Methoden geschehen. Auch ein Spritzgussteil 24,25 aus Kunststoff kann solche Kanäle 27 aufweisen.

Alternativ zu dieser Ausführung können auch Vertiefungen 26 und Einzelkanäle 27 in einen Teil des Zylinderblocks 3' eingeformt sein und der andere Teil des Zylinderblocks 3' kann als Platte ausgeführt sein. In Abweichung von der Darstellung in Fig. 3 können die unteren Enden der Hülsen 20 direkt als Spitzenadapter 8' ausgebildet sein. Zudem kann die Aktuierung, d.h. die Druckwellenerzeugung, abweichend vom Einsatz eines oder mehrerer Piezo-Stapel, z.B. durch einen pneumatischen, magnetischen oder thermischen Impulsgenerator bewerkstelligt werden. Ebenfalls alternativ zu den gezeigten Ausführungsformen kann die erste und/oder die zweite Platte (12,13) eine von der rechteckigen Form abweichende Gestalt aufweisen und z.B. eine quadratische, hexagonale, oktagonale, ovale oder auch runde Form besitzen.

Ein Impuls wird von den als Piezo-Stapel 14 ausgebildeten Impulsgeneratoren 6 auf die zweite Platte 13 abgegeben. Diese Platte 13 gibt den Schlag weiter an die einzelnen Kolben 4, welche eine entsprechend kurze und gezielte Bewegung in ihren Zylinderräumen 3 ausführen. Diese Bewegung löst in der Flüssigkeit in jedem Zylinderraum 3 simultan eine Druckwelle aus. Die Position der Kolben 4 innerhalb des Zylinderraumes 3 wird für dieses Auslösen von Druckwellen (abweichend von der Darstellung in Fig. 3) vorzugsweise so gewählt, dass die freien Kolbenenden 19 zwischen die Öffnungen 22 und die Leitung 7 zu liegen kommen. Dadurch sind die Öffnungen 22 durch die Kolben 4 verschlossen und die Druckwelle kann sich wunschgemäss nur zur Pipettenspitze 8 hin in der Flüssigkeit ausbreiten. Vorzugsweise weisen die Öffnungen 22 eine möglichst grosse Fläche und die Einzelkanäle 27 einen grossen Innendurchmesser auf, damit die Waschflüssigkeit einen möglichst geringen Flusswiderstand erfährt.

Abweichend von diesen Darstellungen in Fig. 2 und 3 können nur beispielsweise 4 oder 8 bzw. auch 16 oder mehr Pumpen 2 und Spitzen 8 in einem linearen Array, welches aus einer einzigen Reihe besteht, angeordnet sein. Vorzugsweise werden aber 96, 384 oder mehr Pumpen 2 und Spitzen 8 parallel in einem zweidimensionalen Array so angeordnet, dass dieses Array dem Format und der Anordnung einer Mikroplatte mit 96, 384, 864, 1536 oder mehr Töpfchen entspricht. Ein solches Array von je parallel zueinander angeordneten Pumpen 2 und Spitzen 8 erlaubt das gleichzeitige Aspirieren oder Dispensieren von 96, 384 oder mehr Proben, wodurch die Zeit zum Bearbeiten einer entsprechenden, hochdichten Mikroplatte erheblich verkürzt werden kann.

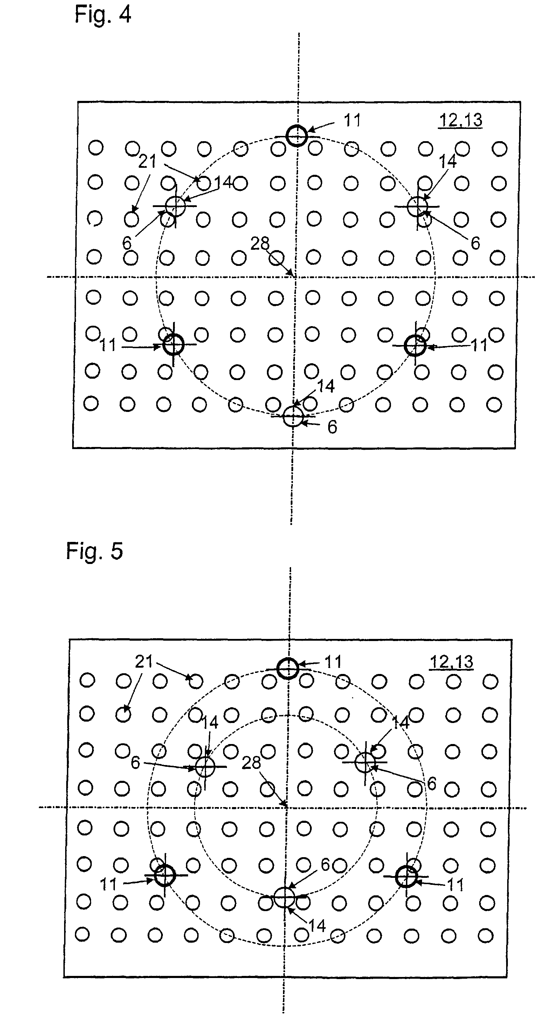

Figur 4 zeigt, in einer horizontale Draufsicht, eine Anordnung des Kolbenantriebs 5 gemäss einer ersten Ausführungsform. Drei Spindeln 11 und drei Impulsgeneratoren 6 sind von der Mitte des Zylinderblocks 3' bzw. der beiden Platten 12,13 jeweils um die gleiche Distanz entfernt, welche auch zwischen ihnen und den nächstliegenden Impulsgeneratoren 6 bzw. Spindeln 11 liegt. Dadurch ergibt sich eine dreizählige Symmetrie, deren Zentrum 28 in der Mitte des Zylinderblocks 3' bzw. der beiden Platten 12,13 liegt. Diese Symmetrie ermöglicht eine gleichmässige Verteilung der Kräfte in den Platten 12,13 und damit eine gleichmässige Verschiebung derselben mit dem ersten Antrieb 9 und dem zweiten Antrieb 10. Auch hier wird mit dem ersten Antrieb die Flüssigkeit in die Spitzen nachgeliefert, so dass vor jedem Impuls durch den zweiten Antrieb eine zusammenhängende Flüssigkeitssäule den aktiven Raum von Zylinderraum 3, Leitung 7 und Spitze 8 ausfüllt. Die beschriebene Anordnung hat den Vorteil, dass die Ebenen der Platten 12,13 nie überbestimmt sind und dass nur drei Piezo-Stapel genügen, um gleichzeitig 96 oder auch 384 oder mehr Proben abzugeben.

Figur 5 zeigt eine horizontale Draufsicht auf eine Anordnung des Kolbenantriebs gemäss einer zweiten Ausführungsform. Im Unterschied zu Figur 4 sind hier die Spindeln 11 und die Impulsgeneratoren 6 nicht auf einem gemeinsamen Teilkreis (gestrichelt gezeichnet) angeordnet. Die Spindeln 11 bzw. die Impulsgeneratoren 6 definieren aber sowohl in Figur 4 als auch in Figur 5 je ein Dreieck, dessen Schwerpunkt immer mit dem Symmetriezentrum 28 übereinstimmt. Die damit erreichte Symmetrie ermöglicht eine gleichmässige Verteilung der Kräfte in den Platten 12,13 und damit eine gleichmässige Verschiebung derselben mit dem ersten Antrieb 9 und dem zweiten Antrieb 10. Weitere Anordnungen, die diesem Symmetrie-Prinzip entsprechen, gehören zum Umfang dieser Erfindung.

In der Praxis hat sich eine weitere Variante einer Anordnung der Impulsgeneratoren 6 bewährt, bei welcher die Piezo-Stapel 14 in den Ecken eines gleichschenkligen Dreiecks angeordnet sind, die Basis dieses Dreiecks im Wesentlichen parallel zu einer Längskante der Platten 12,13 verläuft und etwa 1/3 deren Länge misst. Wiederum liegt der Schwerpunkt dieses Dreiecks im Symmetriezentrum 28 der Platten 12,13.

Die entsprechenden Bestandteile sind in den Figuren mit den gleichen Bezugszeichen versehen.

Zum Pipettieren aus z.B. einer 96-well Mikroplatte werden im Fall der Verwendung von Wegwerfspitzen diese zuerst aufgenommen. Die Platten 12, 13 werden mit dem ersten Antrieb 9 so weit zurückgezogen, dass die Enden 19 der Kolben 4 hinter die Öffnungen 22 in den Hülsen 20 zu liegen kommen. Danach werden die Kanäle 27, die Zylinderräume 3, die Leitungen 7 bzw. die Spitzen 8 und Spitzenadapter 8' mit Systemflüssigkeit (z.B. mit deionisiertem oder destilliertem Wasser) gespült bzw. gefüllt. Anschliessend werden die Kolben 4 in Richtung der Spitzen 8 bewegt, um die Pumpen 2 für die Flüssigkeitsaufnahme über die Spitzen (Aspirieren) vorzubereiten. Werden die Kolben 4 dabei bis zu einer vordersten Position bewegt, so wird eine maximale Aspirationskapazität bereitgestellt. Nach dem Bewegen des Arrays mit 96 Pumpen 2 und Spitzen 8 über die aufzunehmende Flüssigkeit, werden die Spitzen etwas in die Flüssigkeit eingetaucht. Durch Zurückziehen der Kolben 4 mit dem ersten Antrieb 9, wobei der Weg durch die Drehung der Spindeln 11 bestimmt wird, erfolgt die Aufnahme (Aspiration) der zu pipettierenden Flüssigkeit und zwar zeitgleich in allen Spitzen 8.

Für die Abgabe (Dispensierung) werden die Kolben 4 gegen die Spitzen 8 hin bewegt. Um einen sauberen Abriss der Flüssigkeit von den Spitzen 8 und damit genaue Volumina zu erzeugen, ist eine gewisse Mindestgeschwindigkeit und ein abruptes Stoppen der Kolben 4 am Ende der Abgabe erforderlich. Für abzugebende Volumina im Mikroliter-Bereich genügt meistens der erste Antrieb 9 für eine genaue Probenabgabe. Im Submikroliter-Bereich hingegen reichen Beschleunigung und abruptes Stoppen des Spindelantriebs nicht mehr, um einen sauberen Abriss der anzugebenden Flüssigkeit zu gewährleisten. Aus diesem Grund werden die Kolben 4 zusätzlich mit dem zweiten Antrieb 10 durch Piezo-Aktuierung bewegt.

Diese Aktuierung erfolgt durch entsprechende, mit einer Frequenz von 1 bis 1000 Hz an die Piezo-Stapel 14 abgegebene, elektrische Rechteckimpulse, welche - gleichzeitig mit der Bewegung der Kolbenmatrix - ausgeführt und zusammen mit dieser das zu dispensierende Volumen der Proben bestimmt. Diese Bewegungen der beiden Antriebe 9,10 werden vorzugsweise so synchronisiert, dass der erste Impuls mit Beginn und der letzte Impuls mit dem Ende der Fahrbewegung der Kolben 4 erfolgt. Durch diese Synchronisation stellt die Piezo-Aktuierung auch bei langsamen Bewegungen der Kolbenmatrix einen sauberen Tropfenabriss sicher. Dies wird wie beschrieben durch eine Übertragung des durch die Impulsgeneratoren 6 ausgelösten und mit der zweiten Platte 13 auf die Kolben 4 und damit auf die Flüssigkeit in den Zylinderräumen 3 übertragenen Impulse ermöglicht.

Für das Dispensieren im Bereich weniger nl kann das Einzeltropfen-Volumen auch allein durch die Stärke der Piezo-Aktuierung bestimmt werden. Das abgegebene Gesamtvolumen ergibt sich dann aus der Anzahl der Tropfen und deren Inhalt. Die Einzeltropfengrösse wird bei dieser Art des Dispensierens hauptsächlich durch die Stärke der Aktuierung und durch den Öffnungsdurchmesser der Pipettenspitze 8 bestimmt. Diese beiden Parameter werden denn auch vorzugsweise auf die Menge und die physiko-chemischen Eigenschaften der zu pipettierenden Flüssigkeit abgestimmt.

### Aus dem Gesagten ergeben sich vier Betriebsmodi:

### A Grosse Volumina

Die Abgabe von Volumina von über einem Mikroliter geschieht durch den Vorschub der Kolben 4 und wird allein von dem als Spindelantrieb ausgebildeten ersten Antrieb 9 bestimmt.

### B Mittlere Volumina

Die Abgabe von Tropfen zwischen 0.5 und 1 µl geschieht durch den Vorschub der Kolben 4 und wird von dem als Spindelantrieb ausgebildeten ersten Antrieb 9 bestimmt. Die zusätzliche Piezo-Aktivierung ermöglicht den sauberen Tropfenabriss. Weiterhin sind folgende Varianten möglich:
- B1: Nach dem Vorschub des Kolbens 4 wird der Piezo-Stack einmal betätigt, um den Tropfenabriss aus der Luft zu gewährleisten.
- B2: Vor dem Vorschub des Kolbens 4 wird der Piezo einmal betätigt, um in der Spitze eine definierte Abrisskante zu erzeugen. Das Volumen wird durch den Vorschub des Kolbens 4 definiert und die Piezo-Aktivierung ermöglicht einen Tropfenabriss an derselben Stelle.
- B3: Während des ganzen Vorschubs des Kolbens 4 wird der Piezo-Aktuator angeregt und der Flüssigkeitsstrahl in Einzeltropfen "zerhackt". Das Volumen wird durch den Vorschub definiert.

### C Kleine Volumina

Die Abgabe von Tropfen von weniger als 0.5 µl geschieht durch den als Piezo-Aktivierung ausgebildeten zweiten Antrieb 10. Der Vorschub der Kolben 4 mit dem als Spindelantrieb ausgebildeten ersten Antrieb 9 dient zur Kompensation der abgegebenen Volumina. Idealerweise erfolgt die Kompensation so, dass der Raum, welcher durch Zylinderraum 3, Kolben 4, Leitung 7 und Spitze 8 definiert wird, zumindest vor der nächsten Impulsabgabe mit einer zusammenhängenden Flüssigkeitssäule vollständig gefüllt ist. Somit wird bei der Verwendung der erfindungsgemässen Systeme das Volumen einer abgegebenen Flüssigkeitsprobe bei gegebener Spitzengeometrie allein durch die Parameter eines einzelnen, durch die Impulsgeneratoren 6 erzeugten Impulses definiert.

### D Kleinste Volumina

Wird die Flüssigkeitssäule ein wenig hinter die Spitzenöffnung zurückgezogen, wird es möglich, einzelne Tropfen von bis zu 10 nl mit einzelnen Impulsen des Piezo-Aktuators aus einer Spitzenöffnung von bis zu 500 µm Durchmesser herauszuschleudern. Das Tropfenvolumen ist damit nur von der Impulsstärke, nicht aber von Öffnungsdurchmesser abhängig.

Alle obengenanten Pipettiermodi können sowohl mit als auch ohne Luftblase ("Separation Air Gap") zur Trennung von Probe und Systemflüssigkeit angewendet werden. Ebenfalls sind sowohl fix montierte Spitzen als auch wegwerfbare Kunststoffspitzen verwendbar.

Ohne Separation Air Gap kann etwas präziser als mit Air Gap pipettiert werden, hingegen wird die Probe durch die Systemflüssigkeit etwas verdünnt, was bedingt, dass etwas mehr Probenmaterial aspiriert wird, als dispensiert wird. Der leicht verdünnte Rest wird verworfen.

Ein grosser Vorteil der erfindungsgemässen Vorrichtungen und Systeme ist insbesondere darin zu sehen, dass mit einem einzigen Gerät grosse, mittlere und kleine Probenvolumina mit hoher Genauigkeit und mit einer praktisch beliebigen Anzahl Kanälen (Einzelpipette bis zu Arrays mit 384 und mehr Pipetten) abgegeben werden können.

Der Öffnungsdurchmesser der Pipettenspitzen 8 beträgt je nach dem erwünschten Volumenbereich der abzugebenden Proben 25 µm bis 500 µm. Der Innendurchmesser der Pipettenspitzen bzw. der Nadeln verjüngt sich von ca. 0.5 mm bis 1 mm bis zum Auslass der Spitze 8 hin. Die Stirnfläche der Spitzen 8 soll im Rahmen der Herstellungsmöglichkeiten so klein wie möglich sein.

Die erfindungsgemässen Vorrichtungen 1 und Systeme umfassen vorzugsweise einen - z.B. eingebauten oder auch beigestellten - Computer zur Synchronisation der beiden Antriebe 9,10 bzw. zur Steuerung der Aufnahme und Abgabe von Flüssigkeitsproben.

## Patentansprüche

1. Vorrichtung (1), zur Aufnahme und Abgabe von Flüssigkeitsproben mit einer Pumpe (2), umfassend:
• einen Zylinderraum (3) mit einem in diesem Zylinderraum beweglichen Kolben (4);
• eine über eine Leitung (7) mit dem Zylinderraum (3) verbundene Spitze (8);
• einen am Kolben (4) angreifenden Kolbenantrieb (5), welcher einen ersten Antrieb (9) - zum Bewegen des Kolbens (4) gegen die Spitze (8) hin und zum Zurückziehen des Kolbens (4) von der Spitze (8) weg - umfasst,
• einen Kanal (27) zum Spülen des Zylinderraums (3), wobei der Kanal (27) in den Zylinderraum (3) mündet;
**dadurch gekennzeichnet, dass** die Vorrichtung (1) einen Impulsgenerator (6) umfasst, welcher - zum Bewirken der Abgabe von Proben aus einer Flüssigkeit - zum Erzeugen von Druckwellen in dieser Flüssigkeit ausgebildet ist, und dass der Kolbenantrieb (5) einen zweiten Antrieb (10) aufweist, welcher zwischen dem ersten Kolbenantrieb (9) und dem Kolben (4) angeordnet ist und den Impulsgenerator (6) umfasst, wobei dieser Impulsgenerator (6) vom ersten Antrieb (9) immer zusammen mit dem Kolben (4) bewegbar ist und von der gleichen Seite wie der erste Kolbenantrieb auf den Kolben wirkt, um diesen Kolben zum Abgeben einer Flüssigkeitsprobe gegen die Spitze (8) hin zu bewegen.

2. Vorrichtung nach Anspruch 1, **dadurch gekennzeichnet, dass** der von Zylinderraum (3), Kolben (4), Leitung (7) und Spitze (8) definierte Raum mit einer im Wesentlichen zusammenhängenden Flüssigkeitssäule - mit oder ohne Air Gap - gefüllt ist und dass das Volumen einer abgegebenen Flüssigkeitsprobe allein durch die Parameter eines einzelnen, durch den Impulsgenerator (6) erzeugten Impulses definiert ist.

3. Vorrichtung nach Anspruch 1 oder 2, **dadurch gekennzeichnet, dass** der erste Antrieb (9) eine mit einer Spindel (11) bewegbare, erste Platte (12) und der zweite Antrieb (10) eine über einen Impulsgenerator (6) mit der ersten Platte (12) verbundene und am Kolben (4) angreifende, zweite Platte (13) umfasst.

4. Vorrichtung nach einem der vorhergehenden Ansprüche, **dadurch gekennzeichnet, dass** der Zylinderraum (3) einen Inhalt von 5 bis 200 µl fasst.

5. Vorrichtung nach einem der vorhergehenden Ansprüche, **dadurch gekennzeichnet, dass** der Impulsgenerator (6) als vorgespannter Stapel von Piezo-Elementen (14) ausgebildet ist.

6. Vorrichtung nach einem der vorhergehenden Ansprüche, **dadurch gekennzeichnet, dass** die Spitze (8) als Wegwerfspitze oder Nadel aus Stahl oder anderen Materialien zum Pipettieren von Flüssigkeiten ausgebildet ist.

7. System zur Aufnahme und Abgabe von Flüssigkeitsproben, **dadurch gekennzeichnet, dass** es mehrere Vorrichtungen (1) nach einem der Ansprüche 1 bis 6 umfasst.

8. System nach Anspruch 7, **dadurch gekennzeichnet, dass** es n Pumpen (2), n Leitungen (7) und n Spitzen (8), einen ersten Antrieb (9) und einen zweiten Antrieb (10) mit m Impulsgeneratoren (6) umfasst, wobei n eine ganze Zahl - insbesondere 8, 96 oder 384 - und m eine ganze Zahl - insbesondere 1, 2 oder 3 - bedeuten.

9. System nach Anspruch 7 oder 8, **dadurch gekennzeichnet, dass** es ein Array von parallel zu einander angeordneten Pumpen (2) und Spitzen (8) umfasst, wobei dieses Array dem Format und der Anordnung einer Mikroplatte mit 96, 384, 864, 1536 oder mehr Töpfchen entspricht.

10. System nach Anspruch 9, **dadurch gekennzeichnet, dass** es ein Array von 96, 384 oder mehr parallel zu einander angeordneten Pumpen (2), Leitungen (7) und Spitzen (8), einen zumindest drei Spindeln (11) umfassenden, auf eine gemeinsame erste Platte (12) wirkenden ersten Antrieb (9) und einen zumindest drei, je einen vorgespannten Stapel von Piezo-Elementen (14) aufweisende, Impulsgeneratoren (6) umfassenden, zweiten Antrieb (10) umfasst, wobei der zweite Antrieb (10) zudem eine über die drei Impulsgeneratoren (6) mit der ersten Platte (12) verbundene und simultan an allen Kolben (4) angreifende, zweite Platte (13) umfasst.

11. System nach einem der Ansprüche 7 bis 10, **dadurch gekennzeichnet, dass** es ein Kanalsystem (15) umfasst, welches in jeden der Zylinderräume (3) mündet.

12. System nach einem der Ansprüche 7 bis 11, **dadurch gekennzeichnet, dass** die Spitzen (8) als wegnehmbare bzw. automatisch aufnehm- und wegwerfbare Spitzenplatte (16,16') ausgebildet sind.

13. System nach einem der Ansprüche 7 bis 12, **dadurch gekennzeichnet, dass** es einen Computer zur Steuerung der Aufnahme und Abgabe von Flüssigkeitsproben umfasst.

## Claims

1. Device (1) for the aspiration and dispensing of fluid samples with a pump (2), comprising:
• a hollow cylinder (3) with a piston (4) moving inside it;
• a tip (8) connected to the hollow cylinder (3) by means of a duct (7);
• a piston drive (5) engaging with the piston (4), comprising a first drive (9) which moves the piston (4) towards the tip (8) and draws the piston (4) back away from the tip (8);
• a conduit (27) to flush the hollow cylinder (3), the conduit (27) opening into the hollow cylinder (3);
**characterized in that** the device (1) includes a pulse generator (6) which is designed to effect the dispensing of samples of a fluid by generating pressure waves in this fluid, and **in that** the piston drive (5) is provided with a second drive (10) positioned between the first drive (9) and the piston (4) and includes the pulse generator (6), this pulse generator (6) being able to be moved by the first drive (9), always integrally with the piston (4), and acting upon the piston from the same side as the first piston drive in order to move this piston towards the tip (8) so that it dispenses a fluid sample.

2. Device according to Claim 1, **characterized in that** the space defined by the hollow cylinder (3), piston (4), duct (7) and tip (8) is filled with an essentially continuous column of fluid, with or without an air gap, and **in that** the volume of a fluid sample dispensed is defined solely by the parameters of a single pulse generated by the pulse generator (6).

3. Device according to Claim 1 or 2, **characterized in that** the first drive (9) comprises a first plate (12), movable by a spindle (11), and the second drive (10) comprises a second plate (13) engaging with the piston (4) and joined to the first plate (12) by a pulse generator (6).

4. Device according to one of the preceding claims, **characterized in that** the hollow cylinder (3) has a content volume of 5 to 200 µl.

5. Device according to one of the preceding claims, **characterized in that** the pulse generator (6) takes the form of a pre-stressed stack of piezo-elements (14).

6. Device according to one of the preceding claims, **characterized in that** the tip (8) takes the form of a disposable tip or needle made of steel or other material for the pipetting of fluids.

7. System for the aspiration and dispensing of fluid samples, **characterized in that** it comprises more than one of the devices (1) according to one of Claims 1 to 6.

8. System according to Claim 7, **characterized in that** it comprises n pumps (2), n ducts (7) and n tips (8), a first drive (9) and a second drive (10) with m pulse generators (6), where n is a whole number - in particular 8, 96 or 384 - and m is a whole number - in particular 1, 2 or 3.

9. System according to Claim 7 or 8, **characterized in that** it comprises an array of pumps (2) and tips (8) arranged parallel to one another, this array corresponding in format and arrangement to a microtitre plate with 96, 384, 864, 1,536 or more wells.

10. System according to Claim 9, **characterized in that** it comprises an array of 96, 384 or more pumps (2), ducts (7) and tips (8) arranged parallel to one another, a first drive (9) comprising a first plate (12) with at least three spindles (11) jointly acting on it and a second drive (10) comprising at least three pulse generators (6) each consisting of a stack of piezo elements (14), the second drive (10) additionally including a second plate (13) joined to the first plate (12) by means of the pulse generators (6) and engaging simultaneously with all the pistons (4).

11. System according to one of Claims 7 to 10, **characterized in that** it includes a channel system (15) opening into all the hollow cylinders (3).

12. System according to one of Claims 7 to 11, **characterized in that** the tips (8) take the form of a removable or automatically fittable and disposable tip plate (16,16').

13. System according to one of Claims 7 to 12, **characterized in that** it includes a data processor to control the aspiration and dispensing of fluid samples.

## Revendications

1. Dispositif (1) destiné à prélever et à déposer des échantillons de liquide à l'aide d'une pompe (2), comprenant :
• un compartiment cylindrique (3) muni d'un piston (4) pouvant se déplacer à l'intérieur de ce compartiment ;
• une pointe (8) reliée au compartiment cylindrique (3) à l'aide d'une conduite (7) ;
• une commande de piston (5) appliquée contre le piston (4) et comprenant un premier élément de commande (9) servant à déplacer le piston (4) contre la pointe (8) et à retirer le piston (4) de la pointe (8),
• un canal (27) servant au lavage du compartiment cylindrique (3), le canal (27) débouchant dans le compartiment cylindrique (3) ;
**caractérisé en ce que** le dispositif (1) comprend un générateur d'impulsions (6) conçu afin de produire des ondes de pression dans le liquide dans le but de déposer les échantillons provenant du liquide, et **en ce que** la commande de piston (5) comporte un deuxième élément de commande (10) qui est placé entre le premier élément de commande (9) et le piston (4) et qui comprend le générateur d'impulsions (6), celui-ci pouvant toujours être actionné par le premier élément de commande (9) en même temps que le piston (4) et agissant sur le piston du même côté que le premier élément de commande afin de déplacer ce piston contre la pointe (8) pour que soit déposé un échantillon de liquide.

2. Dispositif conforme à la revendication 1, **caractérisé en ce que** l'espace délimité par le compartiment cylindrique (3), le piston (4), la conduite (7) et la pointe (8) est rempli par une colonne de liquide en grande partie ininterrompue, avec ou sans bulle d'air, et **en ce que** le volume d'un échantillon de liquide déposé est défini uniquement par les paramètres d'une seule impulsion produite par le générateur d'impulsions (6).

3. Dispositif conforme à l'une des revendications 1 ou 2, **caractérisé en ce que** le premier élément de commande (9) comprend une première plaque (12) pouvant bouger au moyen d'une tige (11) et **en ce que** le deuxième élément de commande (10) comprend une deuxième plaque appliquée contre le piston (4) et reliée à la première plaque (12) par un générateur d'impulsions (6).

4. Dispositif conforme à l'une des revendications ci-dessus, **caractérisé en ce que** le compartiment cylindrique (3) a un contenu de 5 à 200 µl.

5. Dispositif conforme à l'une des revendications ci-dessus, **caractérisé en ce que** le générateur d'impulsions (6) est conçu comme un empilement polarisé d'éléments piézo-électriques (14).

6. Dispositif conforme à l'une des revendications ci-dessus, **caractérisé en ce que** la pointe (8) est conçue comme une pointe jetable ou comme une aiguille en acier ou en tout autre matériau destiné au pipetage de liquides.

7. Système destiné au prélèvement et à la distribution d'échantillons de liquide, **caractérisé en ce qu**'il comprend plusieurs dispositifs (1) conformes à l'une des revendications 1 à 6.

8. Système conforme à la revendication 7, **caractérisé en ce qu**'il comprend n pompes (2), n conduites (7) et n pointes (8), un premier élément de commande (9) et un deuxième élément de commande (10) muni de m générateurs d'impulsions (6), n représentant un nombre entier, notamment 8, 96 ou 384, et m représentant un nombre entier, notamment 1, 2 ou 3.

9. Système conforme à l'une des revendications 7 ou 8, **caractérisé en ce qu'**il comprend un ensemble de pompes (2) et de pointes (8) placées parallèlement les unes aux autres, cet ensemble ayant le format et l'agencement d'une microptaque à 96, 384, 864, 1536 puits ou plus.

10. Système conforme à la revendication 9, **caractérisé en ce qu**'il est composé d'un ensemble de 96 ou 384 pompes (2), conduites (7) et pointes (8), voire davantage, disposées parallèlement les unes aux autres, d'un premier élément de commande (9) comprenant au moins trois tiges (11) et agissant sur une première plaque commune (12) et d'un deuxième élément de commande (10) comprenant au moins trois générateurs d'impulsions (6) comportant chacun un empilement polarisé d'éléments piézo-électriques (14), le deuxième élément de commande (10) comprenant en outre une deuxième plaque (13) reliée à la première plaque (12) par les trois générateurs d'impulsions (6) et appliquée en même temps contre tous les pistons (4) .

11. Système conforme à l'une des revendications 7 à 10, **caractérisé en ce qu**'il comprend un système de canal (15) débouchant dans chacun des compartiments cylindriques (3).

12. Système conforme à l'une des revendications 7 à 11, **caractérisé en ce que** les pointes (8) sont conçues comme une plaque de pointes (16,16') amovible ou automatiquement relevable et jetable.

13. Système conforme à l'une des revendications 7 à 12, **caractérisé en ce qu**'il comprend un ordinateur destiné à commander le prélèvement et le dépôt des échantillons de liquide.
